# EUROPÄISCHE PATENTSCHRIFT

(11) **EP 0 427 215 B1**
(45) Veröffentlichungstag und Bekanntmachung des Hinweises auf die Patenterteilung: **19.10.1994**
(21) Anmeldenummer: 90121249.8
(22) Anmeldetag: 07.11.1990
(51) Int. Cl.: B23Q 7/04, B21D 43/10, B21D 28/22, B25J 9/00

(54) **Nutenstanzanlage**
Notching apparatus
Machine à poinçonner des rainures

(30) Priorität: 09.11.1989 DE 3937266; 13.12.1989 DE 3941126
(43) Veröffentlichungstag der Anmeldung: 15.05.1991
(73) Patentinhaber: Maschinenfabrik Müller-Weingarten AG, D-88250 Weingarten (DE)
(72) Erfinder: Harsch, Erich, D-7987 Weingarten (DE); Frosch, Rolf, D-7987 Weingarten (DE)
(74) Vertreter: Patentanwälte Eisele, Otten & Roth

(56) Entgegenhaltungen:
- WO-A-89/10240
- DE-C- 3 249 402
- JP-A-61 079 585
- VDI-ZEITSCHRIFT Bd. 129, Nr. 10, Oktober 1987, DÜSSELDORF Seiten 117 - 118; A. BAREIS: 'PERIPHERIE FÜR PRESSEN: WIRTSCHAFTLICHES NUTSCHNEIDEN VON ELEKTROMOTOREN-BLECH-KLEINSERIEN '
- PATENT ABSTRACTS OF JAPAN vol. 7, no. 116 (M-216)(1261) 20. Mai 1983 & JP-A-58 34 740 (TOYODA ) 1. März 1983

## Beschreibung

Die Erfindung betrifft eine Nutenstanzanlage insbesondere zur Bearbeitung von Rotor- und Statorblechen nach dem Oberbegriff des Anspruchs 1.

Die Fertigung von Rotor- und Statorblechen erfolgte bisher auf verschiedenartigen Nutenstanzautomaten. So ist beispielsweise in der DE 32 49 402 C2 eine Zuführvorrichtung für Platinen zu einer Nutenstanzanlage bekannt geworden, bei welcher der Transport der Platinen von einer Bearbeitungsstation zur anderen auf einem Drehkreuz erfolgt, welches zur Handhabung der Platinen an seinen Enden Werkzeuge, z. B. Elektro-Magnetstäbe aufweist. Bei dieser bekannten Anlage werden die Platinen von einer Beladestation einer Übergabestation zugeführt und von dort aus an ein Zuführ-Drehkreuz weitergereicht. Von hier aus gelangt die Platine zu einer Platinen-Zentrier- und Ausrichtstation mit Markierungsstanze. Danach wird die Platine einer Nutenstation einer Nutenstanzmaschine zugeführt in welcher die Nuten eingestanzt werden, wobei je nach Werkzeuggestaltung der Stator genutet und gleichzeitig vom Rotor abgetrennt wird. Danach wird der Stator in einer Stator-Ablegestation und der Rotor in einer Rotor-Ablegestation abgelegt. Zusätzlich können Reservestationen für Rotor- und Statorpakete und eine weitere Station für leere Paletten vorgesehen sein.

Diese mit einem Drehkreuz versehene bekannte Anlage hat zwar den Vorteil, daß eine hohe Produktivität bei Fertigungsprogrammen mit längerer Laufzeit durch hohe Hubzahlen der Maschine und extrem niedere Zuführzeiten gewährleistet ist. Die Anlage hat jedoch auch den Nachteil, daß sie einen hohen baulichen Aufwand mit beispielsweise fünf Greiferarmen am Drehkreuz erfordert, die auch einen hohen steuerungstechnischen Aufwand benötigen. Derartige Anlagen sind hinsichtlich unterschiedlicher Werkstückabmessungen und hinsichtlich der Einfügung oder Weglassung von weiteren Bearbeitungsstationen sehr unflexibel.

Um eine höhere Flexibilität zu erreichen, sind weiterhin Nutenstanzanlagen bekannt geworden, die die Zu- und Abführung der Bleche mittels Roboter mit mehreren Freiheitsgraden vollziehen (VDI-Nachrichten vom 29.09.89, Nr. 39, Satz 34). Roboter können zwar aufgrund ihrer weitgehend freien Programmierbarkeit sehr flexibel eingesetzt werden. Sie haben jedoch den Nachteil, daß die Handlingsgeschwindigkeit gegenüber dem geschilderten Drehkreuz deutlich eingeschränkt ist, da der Roboterarm jeweils nur an einer Bearbeitungsstation tätig werden kann und Zeit benötigt, um die verschiedensten Handhabungsvorgänge vorzunehmen. Deshalb sind auch bereits Nutenstanzanlagen bekannt geworden, die zwei separate Robotor für das Einlegen und Entnehmen der Werkstücke vorsehen, um eine weitere Taktzeitreduzierung zu erreichen.

Weiterhin ist ein Roboter mit einem Arm bekannt geworden, der als Werkzeug eine Art Drehkreuz aufweist, d. h. es befinden sich zwei um 180° schwenkbare Greiferwerkzeuge, z. B. Elektro-Magnetstäbe oder pneumatische Greifer am Ende des Roboterarms. Hierdurch kann beispielsweise ein fertig bearbeitetes Werkstück aus einer Nutenstanzmaschine herausgenommen und - bei stillstehendem Roboterarm, durch Drehung des Greiferwerkzeugs um 180° - ein neues, zu bearbeitendes Werkstück in die Maschine eingelegt werden.

Aus der JP-A-610 79 585 ist ein Handhabungsgerät in einer Fertigungsanlage bekannt geworden, mit welchem der Werkstücktransport beim Einlege- und Entnahmevorgang sowie beim Transport zwischen den einzelnen Bearbeitungsstationen mittels zwei separaten Greiferarmen erfolgt, wobei zwei auf einer gemeinsamen Achse angeordnete, in der gleichen Horizontalebene bewegbare Greiferarme vorgesehen sind. Dabei sind solche Greiferarme vorgesehen, die in ihrer Schwenkrichtung um die gemeinsame Drehachse gesteuert bewegbar sind und ein Hubmechanismus zur Durchführung einer Hubbewegung zum Anheben und Absenken der Werkstücke aufweisen.

Der Erfindung liegt die Aufgabe zugrunde, die Vorteile einer Roboter-Nutenstanzanlage beizubehalten, deren Nachteile jedoch weitgehend zu eliminieren. Diese Aufgabe wird ausgehend von einer Nutenstanzanlage der einleitend bezeichnenden Art erfindungsgemäß durch die Merkmale des Anspruchs 1 gelöst.

Durch die in den Unteransprüchen aufgeführten Maßnahmen sind vorteilhafte und zweckmäßige Weiterbildungen der Erfindung angegeben.

Der Erfindung liegt der Kerngedanke zugrunde, daß die Vorteile einer Nutenstanzanlage mit Zuführ-Drehkreuz mit der hohen Flexibilität eines Roboters vereinigt werden. Die Vorteile des Zuführ-Kreuzes liegen insbesondere darin, daß eine feste taktmäßige Zwangsverknüpfung der einzelnen Bearbeitungsstationen dadurch erzielt wird, daß das Drehkreuz in einer vorgegebene Taktzeit weitertaktet.

Hierbei befinden sich sämtliche Greifersysteme auf einem Radius um eine gemeinsame Mittelachse, die als Drehachse des Drehkreuzes dient. Hierdurch wird mit einem einzigen Antrieb und einer entsprechenden zentralen Steuerung die Bewegung des Drehkreuzes vollzogen. Dies ist sehr platzsparend und wirtschaftlich.

Um den Nachteil des Drehkreuzes mit seiner völlig starren und unveränderbaren Anordnung der einzelnen Greiferstationen zu vermeiden, sieht die Erfindung deshalb vor, daß die Greiferstationen eines Drehkreuzes von ihrer geometrischen Anordnung her aufgetrennt werden. Hierdurch wird erreicht, daß sich die Greiferstationen unabhängig voneinander bewegen können, so daß nicht wie bei einem Drehkreuz, die längste Bearbeitungszeit an einer Station die Taktzeit mehr bestimmt. Vielmehr können die Greiferstationen unabhängig voneinander bestimmte Bearbeitungsstationen anlaufen und an diesen Stellen verweilen. Hierdurch werden quasi die Merkmale des Drehkreuzes mit denjenigen des Robotersystems vereinigt, wobei die jeweiligen Vorteile übernommen werden.

Die erfindungsgemäße Anlage sieht demnach zwei auf einer gemeinsamen Drehachse angeordnete Greiferarme oder Roboterarme vor, die jedoch unabhängig voneinander bewegbar sind. Durch diese platzsparende Anordnung kann der Transport der Werkstücke ähnlich erfolgen, wie bei einem Drehkreuz, ohne jedoch an die starre Vertaktung des Drehkreuzes gebunden zu sein.

Zum Anheben und Absenken der Werkstücke müssen die Greiferarme eine Hubbewegung in geringem Umfang, d. h. z. B. 20 bis 30 mm durchführen können. Hierfür sind in vorteilhafter Ausgestaltung der Erfindung Kolben-

Zylindereinheiten vorgesehen, die konzentrisch um die gemeinsame Drehachse angeordnet sind und den einen Greiferarm von unten her und den anderen Greiferarm von oben mit einer Hubbewegung beaufschlagen. Da die Greiferarme auch in der jeweils angehobenen Stellung eine Schwenkbewegung durchführen müssen, muß das Antriebszahnrad auch im angehobenen Zustand mit dem zugehörigen Antriebsritzel in Eingriff stehen. Hierzu wird beispielsweise das Ritzel in seiner Höhe derart groß ausgeführt, daß sich das Zahnrad während des Hubvorganges stets in Eingriff befindet. Ein derartiges System ist sinngemäß in der DE 32 49 402 gezeigt.

Sowohl die Schwenkbewegung um die vertikale Drehachse als auch die Längsbewegung in der Längsrichtung des jeweiligen Greiferarms sind nummerisch gesteuerte Antriebsachsen. Dabei geschieht die Längsbewegung des Greiferarms durch einen Doppel-Teleskoparm, dessen beide Teleskopstangen aus einem Gehäuse über einen Zahnstangenantrieb oder einen Spindelantrieb herausfahren.

Jeder Greiferarm weist an seinem vorderen Ende ein Greiferwerkzeug für die zu handhabenden Platinen auf, die insbesondere als verstellbare Elektromagnetstäbe (Magnetgreifer) ausgebildet sind. Der Einstellvorgang der Elektromagnetstäbe dient erstens zum einmaligen Umrüsten entsprechend den unterschiedlichen Werkstückgrößen vor dem Produktionsbeginn und zweitens zur optimalen zyklischen Anpassung der Stellung der Magnetstäbe entsprechend dem jeweils zu entnehmenden Werkstück (Stator oder Rotor). Um die beiden inneren und/oder die beiden äußeren Stäbe jeweils achssymmetrisch auseinander fahren zu können, ist vorzugsweise ein elektrischer Antrieb mit jeweils einem Motor vorgesehen, der über eine Drehachse und eine Kegelrad-Umlenkung die Magnetstäbe verstellt.

Der Einstellvorgang der Elektromagnetstäbe kann aber auch durch mindestens einen separaten Verstellmotor vorgenommen werden, an welchem der Greiferarm zur Vornahme der Verstellung "angedockt" wird. Im übrigen bleibt dieser Verstellmotor bzw. die Verstellmotoren stationär und bewegt sich nicht mit den Greiferarmen, was Materialersparnis und Gewichtsersparnis und dadurch weniger Beschleunigungsmasse bedeutet.

Weitere erfindungswesentliche Einzelheiten und Vorteile sind in der Zeichnung dargestellt und in der nachfolgenden Beschreibung näher erläutert. Es zeigen
- Fig. 1: eine Draufsicht auf eine vollautomatische CNC-gesteuerte Nutenstanzanlage,
- Fig. 2: eine Draufsicht auf einen Greiferarm der Anlage nach Fig. 1,
- Fig. 3: einen Schnitt durch die beiden Greiferarme entsprechend der Schnittlinie I-I in Fig. 1 und
- Fig. 4: eine alternative Ausführung der Vorrichtung nach Fig. 3 mit einem Andocksystem für die Verstellung der Elektromagnetstäbe der Greiferwerkzeuge.

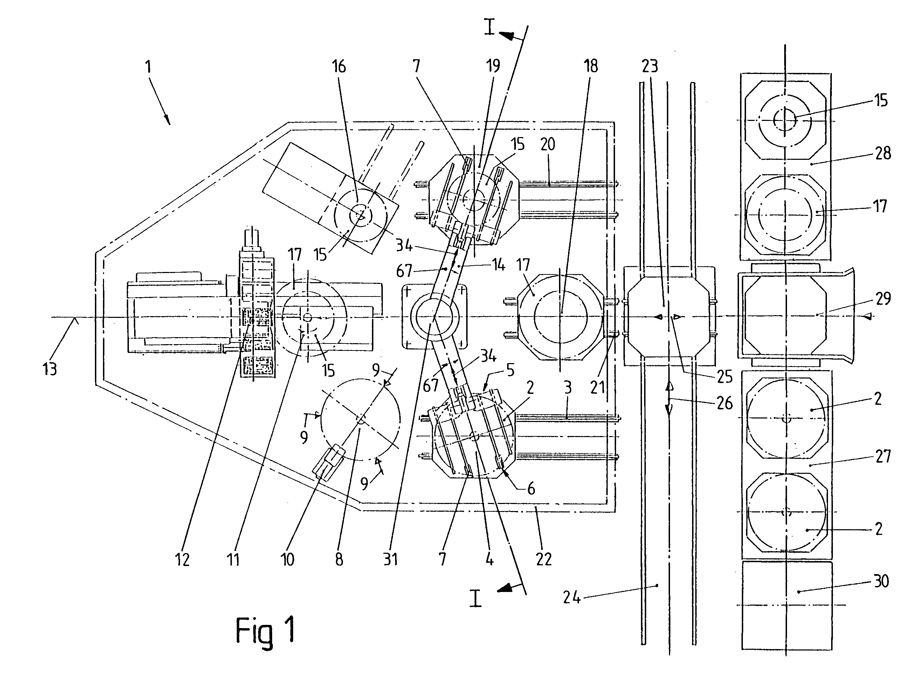

Die in Fig. 1 in Draufsicht dargestellte Nutenstanzanlage 1 stellt eine vollautomatische CNC-gesteuerte Anlage mit Roboterautomatisierung dar. Der Ablauf der Werkstückbearbeitung geschieht ähnlich wie bei einem Drehkreuz, wie in der einleitend zitierten DE 32 49 402 C2 beschrieben. Die einzelnen Bearbeitungsstationen der Anlage werden nochmals wie folgt im Zusammenhang beschrieben.

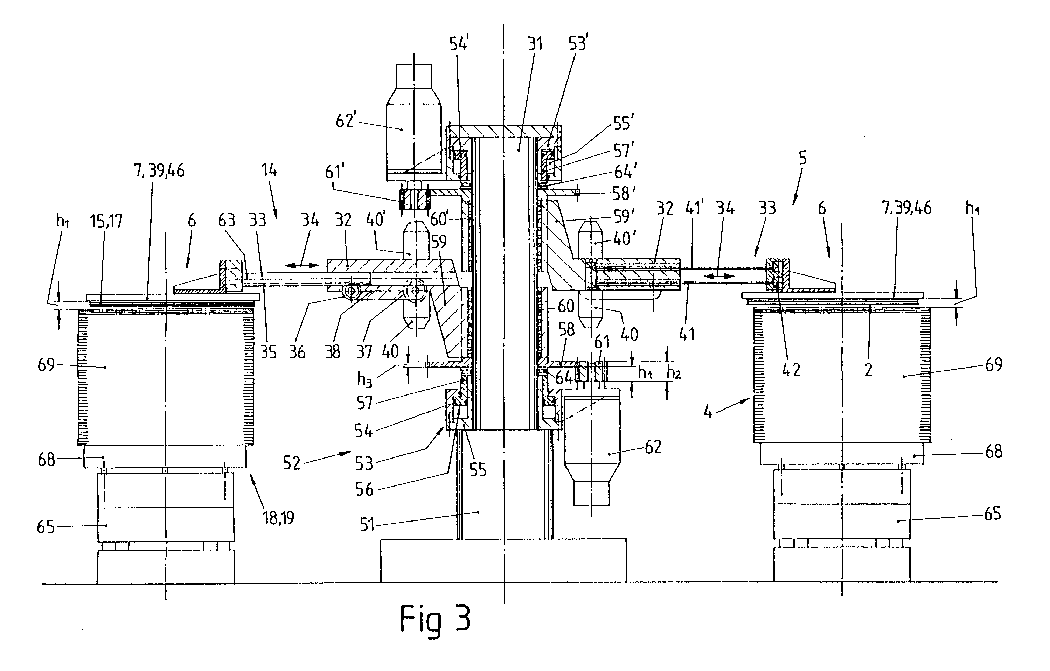

In der dargestellten Nutenstanzanlage sollen Rotor- und Statorbleche für Elektromotoren in einem Arbeitsgang hergestellt werden. Hierfür werden z. B. 0,5 mm dicke Ronden 2 aus Dynamoblech auf einer Palette 68 als Palettenstapel 69 gestapelt und über ein Zuführband 3 einer Belade- und Entnahmestation 4 zugeführt, die mit einer Hubeinrichtung (65 in Fig. 3) zum Anheben der Ronden von dieser Entnahmestation ausgerüstet ist. Der im nachfolgenden noch näher beschriebene erste Greiferarm 5 weist an seinem vorderen Ende ein Greiferwerkzeug 6 auf, welches aus nebeneinander angeordneten Elektro-Magnetstäben 7 - auch Magnetgreifer genannt - besteht. Anstelle solcher Elektro-Magnetstäbe können auch pneumatische Sauggreifer vorgesehen sein. Das Greiferwerkzeug 6 erfaßt die jeweils oberste Ronde 2 und transportiert sie zur nächsten Zentrier- und Ausrichtstation 8 der Anlage. Die Hubeinrichtung 65 in der ersten Station 4 hebt dann den Rondenstapel durch Lichtschranken bzw. Endschalter gesteuert nach oben.

In der Zentrier- und Ausrichtstation 8 deuten die Pfeile 9 die genaue Ausrichtung des Werkstücks an, wobei eine Verdrehung der Ronden um einen bestimmten Winkel zur Durchführung eines Blechdickenausgleichs bzw. Toleranzausgleichs vorgesehen ist. In dieser Zentrier- und Ausrichtstation 8 kann sich auch eine Stanzeinrichtung 10 zur Herstellung einer Statormarkierungsnut befinden. Weiterhin ist in dieser Station 8 eine nicht näher dargestellte Blechdickenmessung für die dickenabhängige Zustellung bei Tangentialnuten vorhanden.

Die eigentliche Bearbeitung der Ronden geschieht in der Nutstation 11, die eine Teileinrichtung zur Drehung der Ronde um einen bestimmten Winkel aufweist. In dieser Station werden die Nuten sowohl des Stator- als auch des Rotorbleches ausgestanzt sowie der Stator vom Rotor getrennt. Weiterhin können in dieser Station zusätzliche Stanzoperationen (z. B. Lüftungslöcher) durchgeführt werden.

Zur Aufnahme der Stanzwerkzeuge ist ein Linear-Werkzeug-Wechselmagazin 12 mit tangentialer Verstellung vorgesehen. Die sogenannte Tangential-Verstellung sieht eine kontinuierliche Nuten-Parallelverschiebung an jeder nachfolgenden Ronde vor, um eine schräge Anordnung der eingestanzten Nuten zu erhalten.

Die Belegung dieser Stationen 4, 8 und 11 mit den noch nicht fertig bearbeiteten Ronden geschieht durch den ersten Greiferarm 5, d. h. dieser Greiferarm 5 bedient den in Fig. 1 dargestellten unteren Bereich der Mittellinie 13.

Nach der durchgeführten Bearbeitung in der Nutstation 11 nimmt der zweite Greifer 14 das innere Rotorblech 15 aus der Nutstation 11 und führt es der Achslochstanze 16 zur Herstellung des Fertigachsloches zu. Anschließend nimmt der zweite Greifer 14 das äußere Statorblech 17 aus der Nutstation 11 und führt es der Stator-Ablegestation 18 mit Hubeinrichtung 65 zu. Das in der Achslochstation 16 bearbeitete Rotorblech 15 wird in die Rotorablegestation 19 mit Hubeinrichtung 65 durch den Greiferarm 14 abgelegt. Der zweite Greiferarm 14 befindet sich in Fig. 1 in dieser Ablagestellung. Ein Transportband 20 dient zum Abtransport der Rotorbleche 15 (Palettenstapel 69) aus der Rotorablegestation 19, ein Transportband 21 zum Abtransport der Statorbleche 17 aus der Statorablegestation 18. Die gesamte Nutenstanzanlage ist von einer Schallschutzkabine 22 umgeben.

Zur Zuführung der Rondenrohlinge 2 über das Zuführband 3 und zur Abführung der fertig bearbeiteten Stator- bzw. Rotorbleche 15, 17 über die Transportbänder 20, 21 dient ein Shuttlewagen 23, der auf einer Schiene 24 die einzelnen Transportbänder 3, 20, 21 anfahren kann und die Palettenstapel jeweils übernimmt. Dieser Vorgang ist durch die Pfeile 25, 26 angedeutet. In einem hinter diesem Shuttlewagen 23 angeordneten Palettenlager 27, 28 werden die jeweiligen Paletten übernommen bzw. übergeben. Das Palettenlager 27 enthält die Paletten mit den Rohlingen, d. h. Ronden 2. Im Palettenlager 27, 28 werden die Paletten 68 mit den fertig bearbeiteten Rotorblechen 15 sowie Statorblechen 17 (Palettenstapel 69) abgelegt. Weiterhin ist ein Palettenspender 29 sowie ein Paletten-Ein- und Ausgabeplatz 30 vorgesehen.

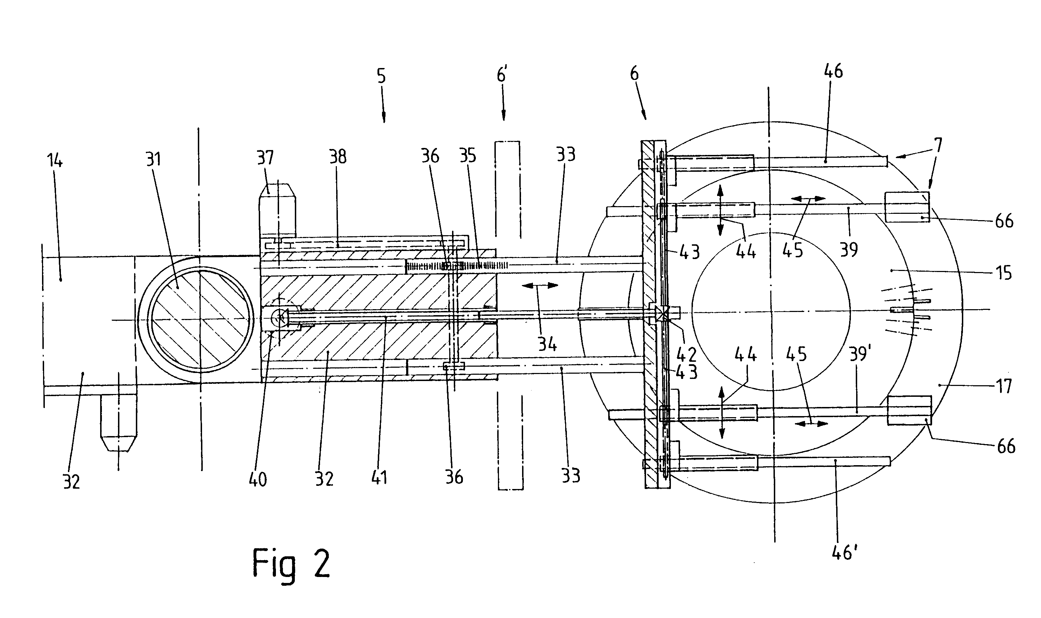

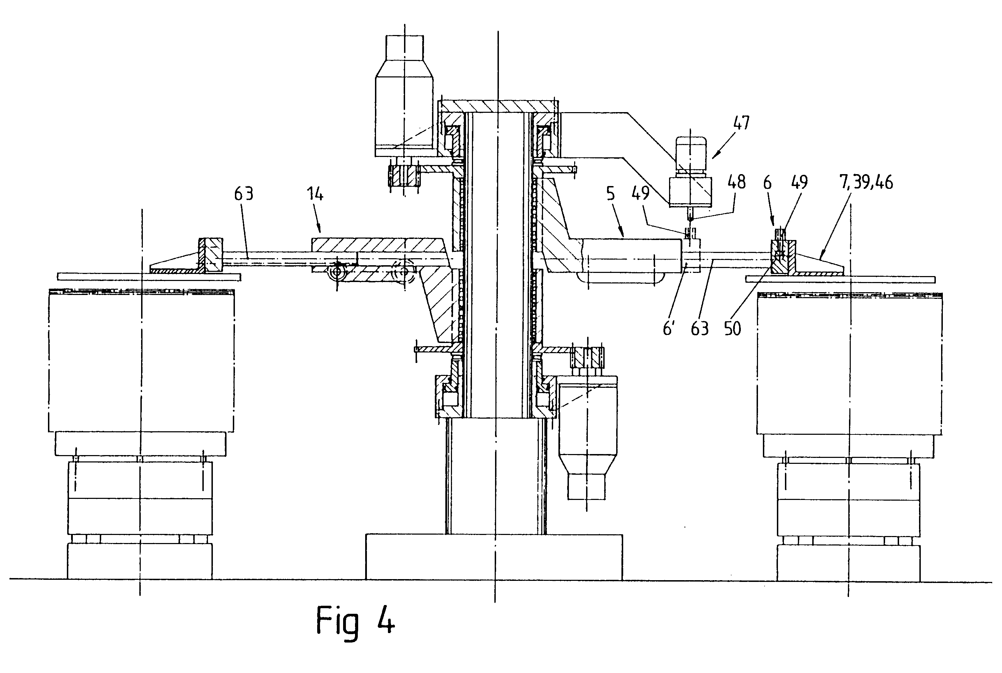

In Fig. 2 ist der erste Greiferarm 5 in Draufsicht dargestellt. Der zweite Greiferarm 14 ist andeutungsweise dargestellt. Er unterscheidet sich prinzipiell nicht vom ersten Greiferarm 5. Die unterschiedliche Lagerung wird in Fig. 3 und 4 beschrieben.

Wie aus Fig. 1 und 2 in Draufsicht sowie in Fig. 3 in Seitenansicht ersichtlich, weisen die Greiferarme 5, 14 eine gemeinsame Drehachse 31 auf, an der die beiden Greiferarme 5, 14 gelagert sind. Jeder Greiferarm 5, 14 weist ein Greiferarmgehäuse 32 auf, in dem ein Doppelarm-Teleskopausleger 33 gelagert ist. Zur Längsverschiebung des Teleskopauslegers 33 (Pfeil 34) weist der Teleskopausleger 33 eine Zahnstange 35 oder eine Spindel 35 auf, die von einem Ritzel 36 oder einer Schnecke angetrieben wird. Dieser Antrieb erfolgt über einen nummerisch gesteuerten Motor 37 über einen Zahnriemenantrieb 38.

In seinem vorderen Bereich weist der Greiferarm 5 ein Greiferwerkzeug 6 mit Elektromagnetstäben 7 bzw. Magnetgreifer 7 auf. In Fig. 2 bzw. Fig. 3 werden die beiden innenliegenden Magnetgreifer 7, 39, 39' (s. Fig. 2) mittels eines Elektromotors 40 über eine Antriebswelle 41 und einer Kegelradgetriebe-Umlenkung 42 in ihrer horizontalen Position verschoben. Das Kegelradgetriebe 42 wirkt auf eine Spindel 43 zur Durchführung der Querbewegung (Pfeil 44). Die Magnetgreifer 39, 39' können auch in ihrer Längsachse verschoben werden (Pfeil 45). Am Ende der Magnetgreifer sind Magnetschuhe 66 angebracht, die zum gezielten Greifen beispielweise des äußeren Statorbleches 17 dienen können. Das Statorblech 17, sowie Rotorblech 15 ist in Fig. 2 symbolisch angedeutet, obwohl dies erst in der Nutstation 11 hergestellt wird.

Wie in Fig. 2 und 3 gezeigt, können die beiden äußeren Magnetgreifer 7, 46, 46' prinzipiell genauso bewegt werden wie die beiden inneren Magnetgreifer 39, 39'. Hierfür ist in Fig. 3 der obere Antriebsmotor 40' und die obere Antriebswelle 41' zusätzlich eingezeichnet. Gleichermaßen ist in Fig. 3, linke Figurendarstellung der in Fig. 2 beschriebene Antriebsmechanismus für die Längsbewegung (Pfeil 34) des Teleskopauslegers 33 mit dem Antriebsmotor 37, dem Antriebsritzel 36 und der Zahnstange 35 eingezeichnet. Die eingefahrene Position des Greiferarmes 5 ist in Fig. 2 mit Bezugszeichen 6' angedeutet.

Wie aus Fig. 2 und 3 ersichtlich, benötigt die Verstellung der Magnetgreifer 39, 39' bzw. 46, 46' einen relativ hohen technischen Aufwand in Form von jeweils zwei Antriebsmotoren 40, 40', den Antriebswellen 41 mit Kegelradgetriebeumlenkung 42 und den Spindeln 43. In bestimmten Fällen kann es ausreichend sein, diese Verstellung der Magnetgreifer 39, 46 lediglich zu Beginn einer neuen Serie von herzustellenden Stator- und Rotorblechen vorzunehmen, was insbesondere die Anpassung der Magnetgreifer an die unterschiedlichen Durchmesser der herzustellenden Werkstücke betrifft. In Fig. 4 ist deshalb eine vereinfachte Ausführungsform der Ausführung nach Fig. 3 gezeigt. Hier wird die Verstellung der Magnetgreifer 7, 39, 46 mittels eines angeflanschten Verstellmotors 47 bewerkstelligt, der mit seiner Verstellspindel 48 in eine Verstellaufnahme 49 am Greiferwerkzeug 6 eingreift. Dies geschieht vorzugsweise in eingefahrener Position des Greiferwerkzeugs 6' im Greiferarm 5. Die Verstellaufnahme 49 kann unmittelbar auf eine Kegelradgetriebeumlenkung 50 einwirken, wie dies mit Bezugszeichen 42 in Fig. 2 und 3 beschrieben ist. Die beiden Greiferarme 5, 14 werden deshalb zu Beginn jeder Serie an den Verstellmotor 47 "angedockt" um die Einstellung der Magnetgreifer 7, 39, 46 an die Werkstückgegebenheiten vorzunehmen. Hierdurch kann der Mehraufwand an Verstellmotoren in Sonderfällen eingespart werden. Im übrigen entspricht die konstruktive Ausführung nach Fig. 4 derjenigen nach Fig. 3.

In Fig. 3 ist weiterhin der MechanismuS zur Durchführung einer Hubbewegung des jeweiligen Werkstücks 2, 15, 17 um den Betrag h₁ dargestellt. Diese Hubbewegung muß in jeder der in Fig. 1 dargestellten Bearbeitungsstationen durchgeführt werden, d. h. die Greiferarme 5, 14 heben das Werkstück um den Betrag h₁ von der jeweiligen Station an, führen eine Schwenkbewegung zur nächstfolgenden Station durch und senken das Werkstück um den Betrag h₁ ab. Die automatischen Hubeinrichtungen der Stationen 4, 18, 19 sind in Fig. 3 mit Bezugszeichen 65 sinngemäß gekennzeichnet.

Der in Fig. 3 in Seitenansicht dargestellte Aufbau der Lagerung der Greiferarme 5, 14 wird wie folgt beschrieben. Die gemeinsame Drehachse 31 weist in ihrem unteren Bereich einen zylindrischen Aufstützsockel 51 auf, auf der sich die untere Hubeinrichtung 52 für den in Fig. 3 links dargestellten Greiferarm 14 abstützt. Die untere Hubeinrichtung 52 besteht aus einem konzentrisch auf der Drehachse 31 gelagerten Pneumatikgehäuse 53 in dem ein beidseitig mit Druckluft zu beaufschlagender, ebenfalls konzentrisch um die Drehachse 31 gelagerter zylindrisch umlaufender Hubkolben 54 gelagert ist. In Fig. 3 befindet sich der Hubkolben 54 in seiner oberen Position, so daß der Druckraum 55 unterhalb der unteren Kolbenfläche 56 des Hubkolbens 54 zu liegen kommt. Der Hubkolben 54 weist einen aus dem Pneumatikgehäuse 53 herausragenden zylindrischen Hubstößel 57 auf, der gegen das Antriebszahnrad 58 für den Greiferarm 14 drückt. Zwischen dem Hubstößel 57 und dem Antriebszahnrad 58 ist ein Kugellager 64 vorgesehen, welches die axialen Kräfte bei der Hubbewegung überträgt und die Schwenkbewegung des Greiferarms 14 ermöglicht. Der mit einer Abkröpfung 59 hergestellte Greiferarm 14 ist mit einer Lagerung 60 auf der Drehachse 31 versehen, die ein axiales Verschieben auf der Drehachse 31 um den Betrag h₁ sowie ein Verschwenken ermöglicht.

Der Schwenkantrieb (Pfeil 67) für den Greiferarm 14 erfolgt über das Antriebszahnrad 58, welches durch das Ritzel 61 und dieses durch den nummerisch gesteuerten Motor 62 angetrieben wird. Da die Schwenkbewegung des Greiferarms 14 sowohl in der angehobenen Stellung nach Fig. 3 als auch in der abgesenkten Stellung ggf. erfolgen muß, weist das Antriebsritzel 61 eine wirksame Eingriffshöhe h₂ auf, die h₁ + h₃ beträgt, wobei h₃ die Höhe des Antriebszahnrads 58 beträgt. Hierdurch wird gewährleistet, daß in jeder Höhenlage des Antriebszahnrads 58 ein Eingriff mit dem Ritzel 61 gegeben ist.

Die Lagerung des oberen, in Fig. 3 auf der rechten Figurenhälfte dargestellten Greiferarms 5 geschieht spiegelbildlich zu derjenigen des linken Greiferarms 14. Deshalb können nahezu alle Bauteile identisch ausgebildet sein, es muß lediglich die spiegelbildliche Anordnung in Bezug auf die gemeinsame Horizontalebene 63 (s. Fig. 4) der beiden Greiferarme 5, 14 gewährleistet sein. Gleiche Teile sind deshalb mit gleichen Bezugszeichen versehen.

Unterschiedlich gegenüber der Ausführungsform der Lagerung des linken Greiferarms 14 ist bei dem rechten Greiferarm 5 die Befestigung des Hubstößels 57' über das Zugkräfte aufnehmende Kugellager 64' zum Antriebszahnrad 58', d. h. der rechte Greiferarm 5 ist mit seiner abgekröpften Lagerung 59', 60' einschließlich Antriebszahnrad 58' und Zwischenlager 64' am Hubstößel 57' aufgehängt. Da sich der rechte Greiferarm 5 ebenfalls in seiner oberen Hubstellung "h₁" befindet, ist der zylindrische Hubkolben 54' ebenfalls in seiner oberen Position, so daß der darunterliegende Druckraum 55' im Pneumatikgehäuse 53' mit Druckmedium beaufschlagt ist. Die übrige Ausbildung der Lagerung des Greiferarms 5 mit dem Antriebszahnrad 58', dem Ritzel 61' sowie dem Antriebsmotor 62' ist in entsprechender spiegelbildlicher Anordnung zur gemeinsamen horizontalen Symmetrieebene 63 - wie zum Greiferarm 14 beschrieben -aufgebaut. Der Antriebsmotor 62' mit Ritzel 61' sowie das Pneumatikgehäuse 53' sind ortsfest an der Drehachse 31 gelagert.

Die Erfindung ist nicht auf das beschriebene und dargestellte Ausführungsbeispiel beschränkt. Sie umfaßt auch vielmehr alle fachmännischen Weiterbildungen im Rahmen des Anspruchs 1.

## Patentansprüche

1. Nutenstanzanlage insbesondere zur Bearbeitung von Rotor- und Statorblechen, bei welcher der Werkstücktransport beim Einlege- und Entnahmevorgang sowie beim Transport zwischen den einzelnen Bearbeitungsstationen mittels zwei separaten Greiferarmen erfolgt, dadurch gekennzeichnet, daß zwei auf einer gemeinsamen Achse (31) angeordnete, in der gleichen Horizontalebene (63) bewegbare Greiferarme (5, 14) vorgesehen sind, daß die Greiferarme (5, 14) in ihrer Längsrichtung (Pfeil 34) und in ihrer Schwenkrichtung (Pfeil 67) um die gemeinsame Drehachse (31) numerisch gesteuert bewegbar sind und daß ein Hubmechanismus (53, 54, 57) zur Durchführung einer Hubbewegung zum Anheben und Absenken der Werkstücke (2, 15, 17) vorgesehen ist.

2. Anlage nach Anspruch 1, dadurch gekennzeichnet, daß die Hubbewegung durch ein senkrechtes Anheben und Absenken jedes Greiferarms (5, 14) im Bereich seiner Lagerung an der Drehachse (31) erfolgt.

3. Anlage nach Anspruch 1 oder 2, dadurch gekennzeichnet, daß zur Anordnung der Greiferarme (5, 14) in gleicher Horizontalebene (63) jeder Greiferarm eine bezüglich seiner Horizontalebene (63) vertikal versetzt angeordnete Lagerung (59, 60) aufweist.

4. Anlage nach einem der Ansprüche 1 bis 3, dadurch gekennzeichnet, daß die Hubbewegung jeder Greiferarme (5, 14) mittels einer sich im oberen und unteren Bereich der Drehachse (31) abstützenden Druckluft-Kolben-Zylindereinheit (53, 54, 53', 54') erfolgt, deren jeweiliges Pneumatikgehäuse (53, 53') mit zylindrischem Hubkolben (54, 54') die Drehachse (31) der Greiferarme (5, 14) konzentrisch umschließen, daß bei Druckbeaufschlagung des zylindrisch umlaufenden Hubkolbens (54, 54') die untere Kolben-Zylindereinheit (53, 54) auf den einen Greiferarm (14) im Sinne einer Schubbewegung einwirkt und der Hubkolben (54') der oberen Kolben-Zylindereinheit (53', 54') den anderen Greiferarm (5) im Sinne einer Zugbewegung anhebt.

5. Anlage nach Anspruch 4, dadurch gekennzeichnet, daß das konzentrisch auf der Drehachse (31) angeordnete Antriebszahnrad (58, 58') für die Schwenkbewegung (Pfeil 67) jedes Greiferarms (5, 14) die Hubbewegung des jeweiligen Greiferarms mitvollzieht, wobei das ortsfeste Antriebsritzel (61, 61') für das Zahnrad (58, 58') in seiner Höhe "h₂" derart bemessen ist, daß das Antriebszahnrad (58, 58') trotz Hubbewegung im Eingriff bleibt.

6. Anlage nach einem der vorhergehenden Ansprüche, dadurch gekennzeichnet, daß jeder Greiferarm (5, 14) einen nummerisch verstellbaren Längsantrieb (35 bis 38) aufweist, wobei ein ausfahrbarer Doppelarm (33) mit verstellbarem Zahnstangen- oder Spindelantrieb (35 bis 38) vorgesehen ist.

7. Anlage nach einem der vorhergehenden Ansprüche, dadurch gekennzeichnet, daß jeder Greiferarm an seinem Ende ein Greiferwerkzeug (6) für Werkstücke (2, 15, 17), insbesondere mit Elektromagnetstäben (7) aufweist, wobei vorzugsweise vier horizontal verschiebbare Magnetgreifer (7, 39, 39', 46, 46') vorgesehen sind.

8. Anlage nach Anspruch 7, dadurch gekennzeichnet, daß die beiden inneren (39, 39') und/oder die beiden äußeren (46, 46') Magnetgreifer (7) des Greiferwerkzeugs (6) jeweils durch einen separaten Elektromotor (40, 40') über eine Antriebswelle (41) mit Kegelradgetriebe-Umlenkung (42) und Antriebsspindel (43) symmetrisch nach außen (Pfeil 44) verschiebbar sind.

9. Anlage nach einem der vorhergehenden Ansprüche, dadurch gekennzeichnet, daß der Verstellvorgang der Elektromagnetstäbe (7, 39, 46) durch einen separaten, ortsfesten Elektromotor (47) erfolgt, an welchem das Greiferwerkzeug (6) zur Durchführung des Verstellvorgangs "angedockt" wird.

10. Anlage nach einem der vorhergehenden Ansprüche, dadurch gekennzeichnet, daß der erste Greiferarm (5) das Werkstück (2) von einer Belade- und Entnahmestation (4) mit Hubeinrichtung (65) entnimmt und mittels einer Hubbewegung zum Anheben, einer Schwenkbewegung zum Verschwenken und weiteren Hubbewegung zum Absenken zunächst einer Zentrier- und Ausrichtstation (8) und danach einer Nutstation (11) zuführt und daß der zweite Greiferarm (14) zum Abtransport der bearbeiteten Werkstücke (15, 17) von der Nutstation (11) zu den Ablagestationen (18, 19) mit Hubeinrichtungen (65) für die fertig bearbeiteten Rotor- und Statorbleche dient.

## Claims

1. A slot stamping plant, particularly for machining rotor and stator plates, in which workpiece transport during the feeding and removal processes and during transport between the individual machining stations are accomplished by two separate gripper arms, characterised in that two gripper arms (5, 14) are provided which are disposed on a common spindle (31) and are adapted for movement in the same horizontal plane (63) and in that the gripper arms (5, 14) are adapted for numerical control in their longitudinal direction (arrow 34) and in their pivoting direction (arrow 67) about the common pivot spindle (31) and in that a lifting mechanism (53, 54, 57) is provided to carry out a lifting movement for raising and lowering the workpieces (2, 15, 17).

2. A plant according to Claim 1, characterised in that the lifting movement is accomplished by a vertical raising and lowering of each gripper arm (5, 14) in the region of its mounting on the pivot spindle (31).

3. A plant according to Claim 1 or 2, characterised in that for disposing the gripper arms (5, 14) in the same horizontal plane (63) each gripper arm has a mounting (59, 60) which is vertically offset in relation to its horizontal plane (63).

4. A plant according to one of Claims 1 to 3, characterised in that the lifting movement of each gripper arm (5, 14) is accomplished by means of a compressed air operated piston-cylinder unit (53, 54,, 53', 54') supported in the top and bottom parts of the pivot spindle (31) and of which each pneumatic housing (53, 53') concentrically encloses the pivot spindle (31) of the gripper arms (5, 14) by cylindrical pistons (54, 54') and in that when pressure is applied to the cylindrically rotating piston (54, 54') the lower piston-cylinder unit (53, 54) acts on one gripper arm (14) in order to produce a pushing motion while the piston (54') of the upper piston cylinder unit (53', 54') lifts the other gripper arm (5) to produce a pulling movement.

5. A plant according to Claim 4, characterised in that the driving gear wheel (58, 58') disposed concentrically on the pivot spindle (31) for the pivoting movement (arrow 67) of each gripper arm (5, 14) accompanies the lifting movement of the respective gripper arm, the stationary driving pinion (61, 61') for the gear wheel (58, 58') being so dimensioned in its height "h₂" that the driving gear wheel (58, 58') remains engaged in spite of the lifting movement.

6. A plant according to one of the preceding Claims, characterised in that each gripper arm (5, 14) has a numerically adjustable longitudinal drive (35 to 38), an extensible double arm (33) with an adjustable rack or spindle drive (35 to 38) being provided.

7. A plant according to one of the preceding claims, characterised in that each gripper arm has at its end a gripper tool (6) for workpieces (2, 15, 17), particularly with electromagnetic rods (7), preferably four horizontally displaceable magnetic grippers (7, 39, 39', 46, 46') being provided.

8. A plant according to Claim 7, characterised in that the two inner (39, 39') and/or the two outer (46, 46') magnetic grippers (7) of the gripper tool (6) being in each case displaceable symmetrically and outwardly (arrow 44) by a separate electric motor (40, 40') via a drive shaft (41) with a bevel gear transmission reversal (42) and drive spindle (43).

9. A plant according to one of the preceding Claims, characterised in that displacement of the electromagnetic rods (7, 39, 46) takes place by means of a separate fixed electric motor (47) on which the gripper tool (6) is "docked" in order to carry out the displacement process.

10. A plant according to one of the preceding Claims, characterised in that the first gripper arm (5) withdraws the workpiece (2) from a loading and withdrawal station (4) with a lifting device (65) and feeds them firstly to a centring and aligning station (8) and subsequently to a slotting station (11) by using a lifting movement for raising, a pivoting movement for pivoting and a further raising movement for lowering the workpieces and in that the second gripper arm (14) serves to remove the machined workpieces (15, 17) from the slotting station (11) to the setting-down stations (18, 19) with lifting means (65) for the completely machined rotor and stator plates.

## Revendications

1. Dispositif pour poinçonner des encoches en particulier pour le traitement de tôles de rotors et de stators, dans lequel le transport de pièces, lors du processus d'introduction et de prélèvement, ainsi que lors du transport entre les postes de traitement individuels, est effectué au moyen de deux bras de prise séparés,
caractérisé en ce que l'on prévoit deux bras de prise (5,14) agencés sur un axe commun (31) et mobiles dans le même plan horizontal (63), en ce que les bras de prise (5,14) sont mobiles, en étant commandés de façon numérique, dans leur direction longitudinale (flèche 34) et dans leur direction de pivotement (flèche 67) autour de l'axe de rotation commun (31), et en ce que l'on prévoit un mécanisme de levage (53,54,57) pour réaliser un mouvement de levage pour soulever et abaisser les pièces (2,15,17)

2. Dispositif selon la revendication 1,
caractérisé en ce que le mouvement de levage est effectué par un soulèvement et un abaissement verticaux de chaque bras de prise (5,14) dans la zone de son palier de montage sur l'axe de rotation (31).

3. Dispositif selon l'une des revendications 1 ou 2,
caractérisé en ce que, pour l'agencement des bras de prise (5,14) dans le même plan horizontal (63), chaque bras de prise comporte un palier de montage (59,60) agencé de façon décalée verticalement par rapport à son plan horizontal (63).

4. Dispositif selon l'une des revendications 1 à 3,
caractérisé en ce que le mouvement de levage de chaque bras de prise (5,14) est effectué au moyen d'un vérin à air comprimé (53,54,53',54') prenant appui dans les zones supérieure et inférieure de l'axe de rotation (31), les boîtiers pneumatiques correspondants (53,53') avec des pistons cylindriques (54,54') desdits vérins entourant de façon concentrique l'axe de rotation (31) des bras de prise (5,14), en ce que, lors de l'alimentation en pression du piston (54, 54') tournant de façon cylindrique, le vérin inférieur (53,54) agit sur l'un des bras de prise (14) dans le sens d'un mouvement de poussée et le piston (54') du vérin supérieur (53',54') soulève l'autre bras de prise (5) dans le sens d'un mouvement de tirage.

5. Dispositif selon la revendication 4,
caractérisé en ce que la roue dentée d'entraînement (58,58') agencée de façon concentrique sur l'axe de rotation (31) pour le mouvement de pivotement (flèche 67) de chaque bras de prise (5,14) effectue conjointement le mouvement de levage du bras de prise correspondant, le pignon d'entraînement fixe (61,61') pour la roue dentée (58,58') étant mesuré dans sa hauteur "h₂" de sorte que la roue dentée d'entraînement (58,58') reste en engrènement malgré le mouvement de levage.

6. Dispositif selon l'une des revendications précédentes,
caractérisé en ce que chaque bras de prise (5,14) présente un entraînement longitudinal (35 à 38) réglable de façon numérique, un bras double déployable (33) étant prévu avec un entraînement réglable à crémaillère ou à broche (35 à 38).

7. Dispositif selon l'une des revendications précédentes,
caractérisé en ce que chaque bras de prise comporte à son extrémité un outil de preneur (6) pour pièces (2,15,17) en particulier avec des tiges électromagnétiques (7), de préférence quatre preneurs magnétiques (7,39,39',46,46') pouvant être déplacés horizontalement étant prévus.

8. Dispositif selon la revendication 7,
caractérisé en ce que les deux preneurs magnétiques (7) internes (39,39') et/ou externes (46,46') de l'outil de preneur (6) peuvent à chaque fois être déplacés symétriquement vers l'extérieur (flèche 44) par un moteur électrique séparé (40,40'), par l'intermédiaire d'un arbre d'entraînement (41) comportant un renvoi (42) à engrenage conique et une broche d'entraînement (43).

9. Dispositif selon l'une des revendications précédentes,
caractérisé en ce que le processus de réglage des tiges électromagnétiques (7,39,46) est effectué par un moteur électrique séparé (47) à poste fixe, auquel est "couplé" l'outil de preneur (6) pour la mise en oeuvre du processus de réglage.

10. Dispositif selon l'une des revendications précédentes,
caractérisé en ce que le premier bras de prise (5) prend la pièce (2) d'un poste de chargement et de prélèvement (4) présentant un dispositif de levage (65) et la transporte d'abord à un poste de centrage et d'alignement (8) et ensuite à un poste de poinçonnage (11), à l'aide d'un mouvement de levage pour soulever, d'un mouvement de pivotement pour pivoter et d'un autre mouvement de levage pour abaisser, et en ce que le deuxième bras de prise (14) sert au transport de la pièce traitée (15,17) du poste de poinçonnage (11) aux postes de dépôt (18,19) avec des dispositifs de levage (65), pour les tôles de rotors et de stators dont le traitement est terminé.
